# EUROPEAN PATENT APPLICATION

(11) **EP 1 931 068 A1**
(43) Date of publication of application: **11.06.2008**
(21) Application number: 06425815.5
(22) Date of filing: 04.12.2006
(51) Int. Cl.: H04J 3/06, G06F 5/06, H04L 12/56

(54) **Method of adaptively dejittering packetized signals buffered at the receiver of a communication network node**

(71) Applicant: Nokia Siemens Networks GmbH & Co. KG, 81541 München (DE)
(72) Inventor: Neri, Danilo, 86036 Montenero di Bisaccia (IT); Pierobon, Massimiliano, 20059 Vimercate (MI) (IT); Semmoloni, Matteo, 21026 Gavirale (VA) (IT); Prati, Luca, 44100 Ferrara (IT)

(57) **Abstract**

A method is disclosed of adaptively de-jittering packetized signals buffered at the receiver of a communication network node. The method is executed by a Jitter Buffer Manager (JBM) to optimize the end-to-end delay for call quality of Voice-over-IP communication. According to the method, the JBM stores the packets in the buffer and determines an appropriate adjustment time for packet dequeuing based at least in part on a result of voice activity detection performed on the received data stream. A target maximum buffer length is set and, comparatively, an initial filling level as the number of packets to be stored in the buffer at the beginning of the packet stream reception before delivering the first packet. Overrun and underrun thresholds are set in respect of the current filling level of the buffer. Exceeding the overrun threshold or going below the underrun threshold increments a respective event-counting. Two alarm thresholds are set by a permitted value of the difference between overrun and underrun counting, and vice versa. Exceeding the alarm thresholds is monitored to trigger either discarding stored packets or storing void packets in the buffer starting from a boundary of a zone filled up with packet marked as silence. After each event of discard or insert packets the relevant event-counting is reset (fig.6).

## Description

### FIELD OF THE INVENTION

The present invention relates to the field of packet-based communication systems suitable for transmitting voice or other information, and more particularly to a method of adaptively dejittering packetized signals buffered at the receiver of a communication network node.

### BACKGROUND ART

Data are transferred in modern communication systems in asynchronous packets. In packet-switched voice communication, maximum voice quality is achieved when voice packets arrive in the order that they were transmitted, at the exact rate that they are transmitted, and with the shortest possible transmission delay. The end-to-end delay of a packet may be defined as the time from its generation at the sender side to when the packet reaches its destination. Delays occurring in a packet-switched network to travel from source to destination may vary depending upon various operating conditions, including but not limited to, channel conditions and network loading (each packet may be routed in different paths).

The end-to-end delay includes the delays introduced in the network and the various elements through the packet passes. Many factors contribute to end-to-end delay. Variance in the end-to-end delay is referred to as jitter. Jitter may cause packets to be received after the packets are no longer useful or may cause packets arriving earlier at the receiver side and resulting in "out-of-sequence" packets. Since the jitter can change a lot from communication to another or even during the same communication it is of interest to adapt some characteristics of the used jitter buffer to the circumstances (adaptive jitter buffer).

Voice-over-IP (VoIP) is a typical application using such network and requesting a high level of quality of service (QoS). A real time communication between a sender and a receiver will then be possible only if such requirement of QoS will be fulfilled. Therefore it is important to control and minimize all delays occurring in the network. As result, Voice-over-lP systems generally require that a given receiver include a jitter buffer that allows the receiver to convert asynchronous received packets to synchronous voice signal suitable for presentation in audibly-perceptible format or for further transmission over synchronous network. The problem of jitter can be solved by using a sufficiently large dimensioned buffer at the receiver of the communication system together with a correct policy of buffer management.

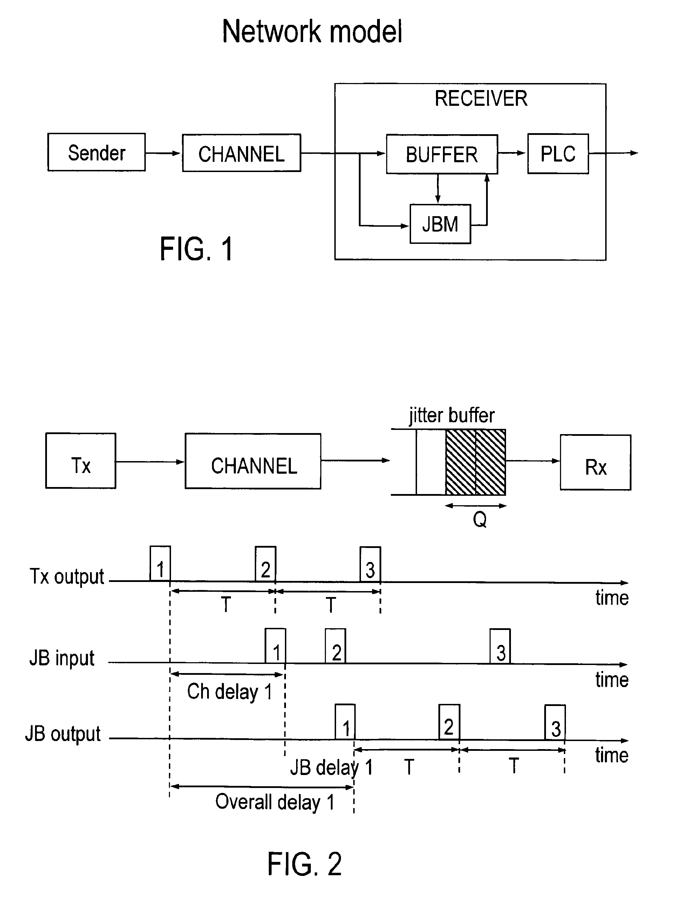

**Fig.1** is a block diagram of an exemplary packet-based communication system It includes the cascade of following functional blocks: the Sender, the Channel, and the Receiver. The receiver includes a jitter Buffer for storing the received packets, a Jitter Buffer Manager (JBM) which is two-sense connected to the Buffer and also receives the incoming packets, and a Packet Loss Concealment (PLC) functional block placed downstream the serial buffer. A jitter buffer is a serial storage unit used to compensate for variation in inter-packet arrival times. The jitter buffer approximates a first-in-first-out (FIFO) with a variable input rate and a constant output rate

**Fig.2**, illustrates the data stream flow between the Sender and the Jitter Buffer Manager. The packets sent by the sender may experience a variable delay (jitter) crossing the transport channel. The purpose of the Jitter Buffer Management is to hold the received packets for a specified period of time before forwarding them to the next functional unit in a regular time interval (T). In a communication system, a jitter buffer typically operates as follows: when a first packet arrives at the receiver's side, the packet is placed in the jitter buffer. The receiver then starts a timer. The timer is called the initial waiting time. When the timer expires, the receiver reads the packet from the buffer and uses it. The receiver then sets a recurring timer. The interval of the recurring timer usually matches the nominal duration of the each voice packet. As the following packets arrive, the receiver place them in the jitter buffer.

As the recurring timer expires the receiver reads the next packet from the buffer. If a packet has not arrived by the time the receiver attempts to read it from the buffer, the packet is counted as lost (buffer underflow). If a packet arrived when the jitter buffer is full and there is no place to store it, the packet is discarded and counted as lost (buffer overflow). Without the correct buffer management a large buffer has no effect on jitter compensation, for example if we have a jitter buffer with infinite size but we do not wait some time before delivering the packets we may have a lot of buffer underflows. However, using a jitter buffer for receiving packets, results in additional delay caused by the waiting time that the jitter buffer manager has to insert in order to be able to provide a regular output stream. This additional delay will result in an increased end-to-end delay that degrades voice quality. Besides a sufficiently large dimensioned jitter buffer consumes additional memory and causes additional costs.

EP1146678A1**,** titled: "An auto-adaptive jitter buffer" describes a method to buffer a data stream at its reception. The delay (jitter) is measured and compared with some predefined value. Depending on the result of that comparison, the buffer size will be adapted dynamically such to optimize the transfer of the packets according to some predefined criteria. The optimization criteria consists of four cases that classify the jitter: Jitter<<T1, T1<Jitter<T2, T2<Jitter<Tm, Jitter>Tm, whereby Tm is the maximum admissible time, T2 is little less than Tm and T1 is noticeable less than Tm. The new jitter buffer is calculated by the difference of a measured jitter to the admissible jitter respectively time constants derived from admissible jitter. It is not mentioned in the cited document how optimal values for T1,T2 and Tm can be calculated. Besides, the influence of jitter peaks on the algorithm is not describe, it can be assumed that peaks make the jitter buffer size grow with no limits and decrease the performance in terms of delay.

US7006511B2 **(**EP1278353A3**),** titled: "Dynamic jitter buffering for voice-over-IP and other packet-based communication systems" adjust the buffer size by adding or deleting space corresponding to a number of voice signal samples proportional to the difference. This has also the negative effect that jitter peaks decrease the performance. Additionally, a speech detection function is realized so that the jitter buffer is only adjusted in speech phases. Speech is detected by the signal energy of the samples. Using the signal energy for detection of speech is unconfident because speech has a high degree of dynamics that makes an appropriate choice of thresholds difficult, also reaction times may be critical.

US7058568-B1**,** titled: "Voice quality improvement for VolP connections on low loss network" describes a procedure to modify jitter buffer latency while the non-speech audio is being received. Modifying the jitter buffer latency while non-speech audio is being received minimizes the loss of spoken words during jitter buffer latency modification. Speech detection is performed by a packet data payload detection

US2006/0045138-A1**,** titled: "Method and apparatus for an adaptive de-jitter buffer" describes a procedure to calculate a de-jitter buffer that avoids playback of underflows while balancing end-to-end delay. Here some additional delay may be inserted in the speech stream in order to smooth the jitter effects. Each "talkspurt" is sent after adequate calculation of a de-jitter buffer or in an alternative way "talkspurt" packets are compressed upon receipt of all remaining packets. The de-jitter buffer is a static buffer that operates in combination with the decoder to perform speech time warping but does not prevent overflows and underflow with adaptation.

JP2005197850-A1**,** titled: "Jitter absorbing method and apparatus fro voice IP terminal" expands and reduces jitter buffer during silence period to prevent deterioration in the speech quality, by means of identifying a voiced/silence state of a received packet.

EP1564935A2, titled: "Method of dynamic adaptation for jitter buffering in packet networks" describes a method of controlling a buffer for reducing jitter in a packet network is provided, with a fast attack and a slow decay time to track delay changes in the network but a packet is not necessarily dequeued according to real time packet application rate. A packet is dequeued independently from the application dequeueing rate every time an overrun event or protection trigger occurs. The principal function of the method for controlling the jitter buffer is to minimize the delay within the buffer and use packet loss compensation in the event that the buffer enters an underflow condition., but no underrun adaptive protection is considered therefore packet insertion in the output stream does not take into account the final quality of the real time application.

EP1517466-A2, titled: "Self-adaptive jitter buffer adjustment method for packet-switched network". The method involves both positive adjustment to jitter buffer and negative adjustment to jitter buffer. The positive adjustment part performs a positive adjustment to the jitter buffer according to an indication of a sequence number of the packet delaying, to absorb larger network jitters by dynamically detecting sequence numbers of the packets in the jitter buffer. The negative adjustment part performs a negative adjustment to the jitter buffer when the filling level descends, to match smaller network jitters by periodically detecting a filling level of the jitter buffer. The method realizes the dynamic tracking of network jitter, so that a self-adaptive adjustment to the jitter buffer working parameters can be achieved, but the adjustment operations are performed without an adaptive protection for underrun and overflows, so they do not take into account the final quality of the real time application.

From the presented prior art we see that conventional techniques for determining and adjusting the jitter buffer suffer from a number of significant drawbacks. These techniques are unable to provide efficient and effective determination of a target buffer size that represents the optimal compromise between buffer delay and probability of packet loss. In addition, they are unable to provide adequate adjustment to the jitter buffer fill level in real time and with minimal degradation of the voice signal, and are not completely prepared to handle packets lost in the channel, out-of-sequence packet arrivals, duplicated packet arrivals and source-controlled rate operation.

### OBJECTS OF THE INVENTION

In view of the above, it is apparent that a need exists especially in 2G/3G mobile radio networks but also in other packet-based communication systems for improved techniques for determining and adjusting the receiver jitter buffer in emulation of circuit-switched calls by packet-switched transmissions (e.g. VolP services), in a way that exhibits low delay, low complexity and high voice quality, so as to overcome the previously described problems associated with conventional buffering techniques.

With a smart adaptive jitter control it becomes possible to connect wire-line networks, DSL networks and WLAN networks, as well as the packet-switched domain of 3GPP mobile networks to the CS domain of 3GPP mobile networks. An improved "Quality of Service" with jitter compensation and small delays can be guaranteed to all network elements.

### SUMMARY OF THE INVENTION

The invention achieves said object by providing a method of adaptively dejittering packetized signals buffered at the receiver of a communication network node, as disclosed in claim 1. Additional features of the present invention which are believed to be novel are set forth with particularity in the appended claims.

According to the method of the invention, the following steps are performed by a buffer control unit:
- detecting for each received packet if it is important or not for the quality of real-time service and marking the packet accordingly;
- setting a target maximum length of the buffer and comparatively an initial filling level as the number of packets to be stored in the buffer at the beginning of the packet stream reception before delivering the first packet;
- setting an overrun threshold as a predetermined number of buffered packets over the current filling level for incrementing an overrun event-counting;
- setting an underrun threshold as a predetermined number of buffered packets below the current filling level for incrementing an underrun event-counting;
- monitoring the overcoming the overrun threshold for a given time as a condition for discarding at least a packet in the buffer starting from a boundary of a zone including buffered packets marked as being unimportant;
- monitoring the going below the underrun threshold for a given time as condition for introducing at least a void packet in the buffer starting from a boundary of a zone including buffered packets marked as being unimportant.

The method, executed by the JBM at the receiver, includes concurrent algorithms for receiving and delivering packets and for controlling the jitter buffer size. Accordingly, the JBM detects jitter errors. Each packet that does not fit into the jitter buffer generates a jitter error. However this packet that has to be discarded for delay is not yet lost because it is still in the receiver buffer. On jitter error events, a speech detector checks this packet by looking into the packet frame and deciding if the frame is "speech", "pause" or "silence". The Voice Activity Detection (VAD) algorithm is assumed as known, so the JBM only checks the status of a flag field set by the VAD in each service frame to indicate the relevant information. indicating Missing packets (by losses in the communication channel) or "Out-of-sequence" packets can be recognized by examining the sequence number of the packet. If the jitter buffer is large enough, whereby large means that multiple packets fit into the jitter buffer, out-of-sequence packets can be re-sorted to a certain degree using the sequence number of the single packets. Packets however, that arrived after the time they are planned to be delivered by the JBM (Late_Loss) have to be discarded, resulting in packet errors. Also a variable packet rate or discontinuous transmission can be tolerated and compensated by the buffer.

The method of the invention is therefore capable of adapting the amount of packets stored in the buffer and waiting for delivery according to the jitter that affects the packet stream and to the real time application quality. The jitter delay is compensated by the jitter buffer policy for fill level of the jitter buffer. This also allows a smooth adaptation of the jitter buffer with corresponding smooth increase or decrease of jitter delay in order to avoid hearable disturbances on the free flow of speech. Peaks in the jitter caused by inappropriate network behavior have no influence on the adaptation as a rate controlled jitter measure adapts the algorithm.

The configuration parameters of the algorithm can be optimized for minimum delay and minimum frame loss. However a small delay results in a large frame loss and a small frame loss in a large delay. Therefore adjustment of the configuration parameters has to be thoroughly done by finding a balance between delay and frame loss. In the starting phase this procedure allows the two approaches for jitter buffer adaptation: The system can start with a small jitter buffer to save memory resources and leave the initial jitter delay as small as possible and adapt to a larger amount of jitter buffer/delay in the course of adaptation. Or the system can start with a larger jitter buffer to avoid frame losses in the beginning and adjust the buffer to smaller needed values.

It should be noted that the invention can be generally applied to any type of audio information and to the types of signals including facsimile signals, signaling tones, etc. Besides, the buffering techniques disclosed by the invention are suitable for use with a wide variety of types of packet-based systems including, for example, Voice-over-IP communication, Asynchronous Transfer Modes (ATM), Frame Relay systems, and digital video transmission systems. In particular, VolP packets considered unimportant for the QoS are the pause and silence ones, while in case of digital video some differential picture frames could be discarded instead of the anchor ones. In both cases a flag field is set to indicate the type of video frame.

Better than prior art the present invention provides low-delay, low-complex adaptive jitter buffering techniques preventing the buffer from growing in unpredictable way in order to conform to channel conditions.

In contrast to EP1146678A1 the method of the present invention does not use fixed intervals to adapt the buffer size but derives a measure of jitter from thresholds on jitter buffer fill level, and the measure is used instead. While the method of the citation measures the jitter directly, the method of the present invention uses a field of the adopted protocol format (RTP) that describes the corresponding payload being speech, pause, silence or others. This approach is much more accurate.

### BRIEF DESCRIPTION OF THE DRAWINGS

The features of the present invention which are considered to be novel are set forth with particularity in the appended claims. The invention and its advantages may be understood with reference to the following detailed description of an embodiment thereof taken in conjunction with the accompanying drawings given for purely non-limiting explanatory purposes and wherein:
- **fig.1**, already described, is a block diagram of an exemplary packet-based communication system in which the present invention is implemented;
- **fig.2**, already described, is a timing diagram illustrating transmission, reception and playback for packets resulting from jittered communication;
- **fig.3** is a flow diagram of the adaptive jitter buffering for the receiving process in accordance with the illustrative embodiment of the present invention;
- **fig.3A** is a representation of the adaptive jitter buffer relevant to fig.3;
- **fig.4** is a flow diagram of the adaptive jitter buffering for the dequeuing process;
- **fig.4A** is a representation of the adaptive jitter buffer relevant to fig.4;
- **fig.5** is a flow diagram of the algorithm triggering the adaptation procedure of the jitter buffer;
- **fig.5A** is a representation of the adaptive jitter buffer relevant to fig.5;
- **fig.6** is a flow diagram of the jitter buffering procedure related to the adaptation operation;
- **fig.6A** is a representation of the adaptive jitter buffer relevant to fig.6.

### DETAILED DESCRIPTION OF AN EMBODIMENT OF THE INVENTION

Before the invention is described in details, some terminology will be introduced, as follows. Term "packet" (pkt) as used herein is intended to include not only IP packets but also other types of packets used in other packet-based communication systems. The term "voice" is used herein are intended to include speech and other human-generated audio information, machine generated audio information or combinations of these and other types of audio information.

According to the adopted terminology, the buffering structure is designed according to a MAXIMUM BUFFER SIZE and an INITIAL FILL LEVEL values. The MAXIMUM BUFFER SIZE corresponds to the amount of memory reserved to the buffer for packet storage, whereas the INITIAL FILL LEVEL is related to the number of packets to be stored in the buffer at the beginning of the packet stream reception before delivering the first packet. These parameters are set according to the amount of memory available and to the expected network jitter conditions. The packet insertion and discarding operations are controlled by four parameters, called without limitation: MONITOR TIME, OVERRUN THRESHOLD, UNDERRUN THRESHOLD, and ALARM COUNT THRESHOLD, whose values are fixed for a specific implementation. The MONITOR TIME is related to the time interval between two subsequent checks on the need of an insertion/discarding operation. The OVERRUN THRESHOLD is a predetermined number of packets over the current filling level for incrementing an overrun event counting. The UNDERRUN THRESHOLD is a predetermined number of packets under the current filling level for incrementing an underrun event counting. The ALARM COUNT THRESHOLD sets a hysteresis on the overrun/underrun event counting difference for triggering an insertion/discarding operation request.

Term INITIAL FILL LEVEL as used herein refers to the portions of the jitter buffer that actually contains signal samples. The adaptive jitter buffering in the illustrative embodiment of the invention is preferably configured such that the actual jitter buffer size is as close to the target as possible. The input of the jitter buffer at receiver's side is a packet stream that suffers from delay variations (between different packets). Consequently, the time spacing between packets in the said stream is different from the one at the sender side. In a packet-based real time application, the receiver, by means of a jitter buffer mechanism, has to deliver the packet stream restoring the original packet time spacing kept at the sender side. The said adaptive jitter buffer adds a variable delay contribution to each received packet in order to compensate the delay variations. This operation is performed at the expenses of an increment of the overall delay between the packet stream at the sender side and the packet stream delivered by the receiver. The statistics of the jitter that affects the network, unknown in almost all cases, constrains the said adaptive jitter buffer to dynamically change its structure according to the jitter conditions. The non-ideality of jitter statistics prediction can create differences between the packet sequence at the sender side and the packet sequence delivered by the receiver (buffer overrun, underrun or out-of-sequence packet delivery). The said overall delay increment and the said differences in the delivered packet stream cause a degradation of the real time application quality.

In order to minimize the delay a packet will spend time in the jitter buffer. An parameter that describes the average time spent inside a jitter buffer is the "average fill level". Jitter compensation actions should be done very careful, abrupt variations in time may lead to a lot of impairments in the voice stream. The described iterative procedure adapts the buffering delay to changing network jitter characteristics by increasing respectively decreasing the reserved buffer part for jitter buffering.

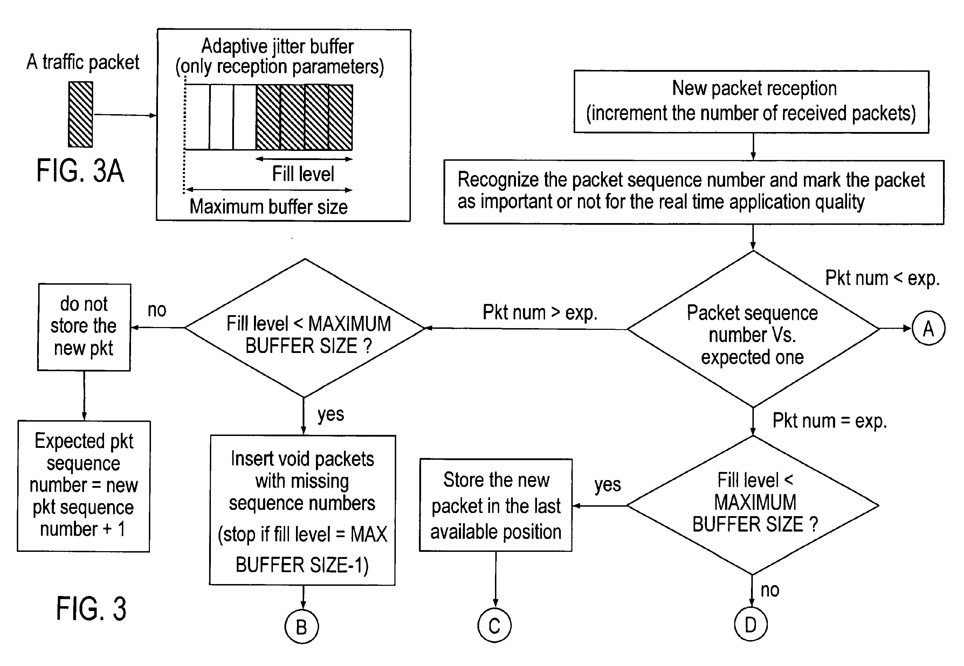

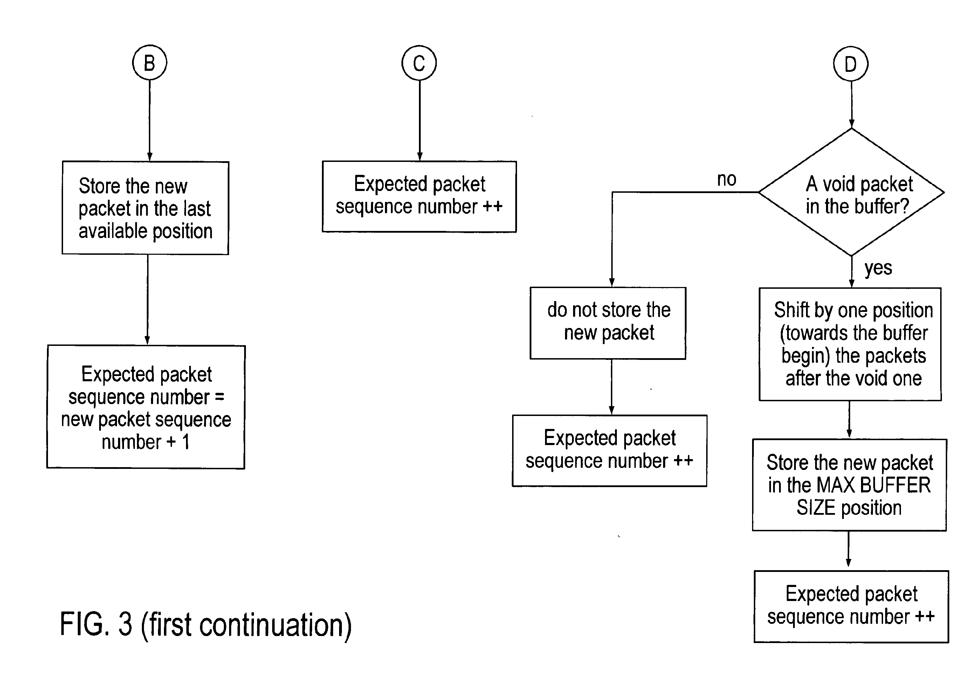

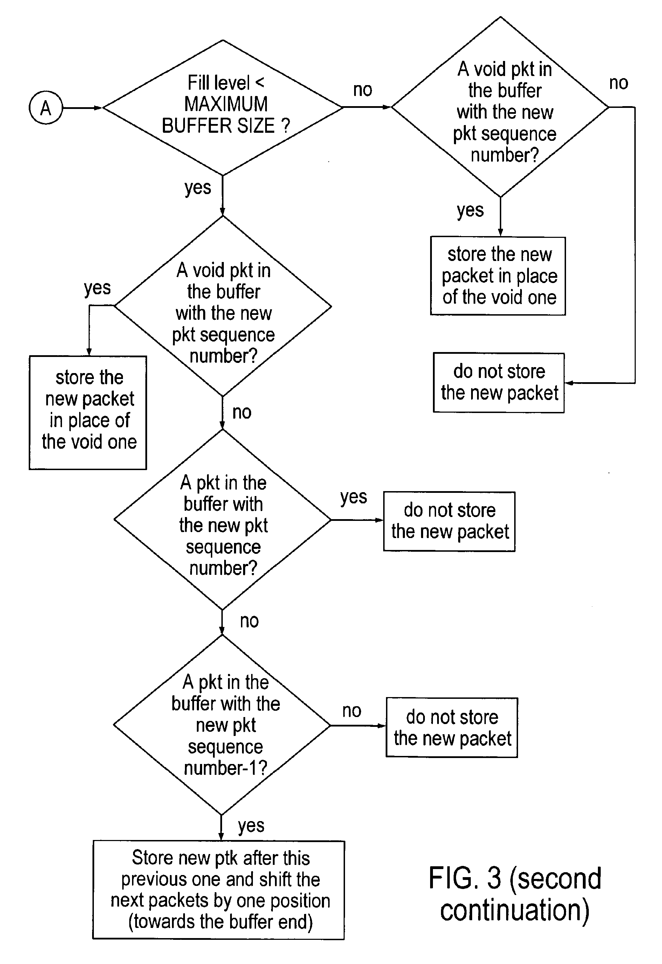

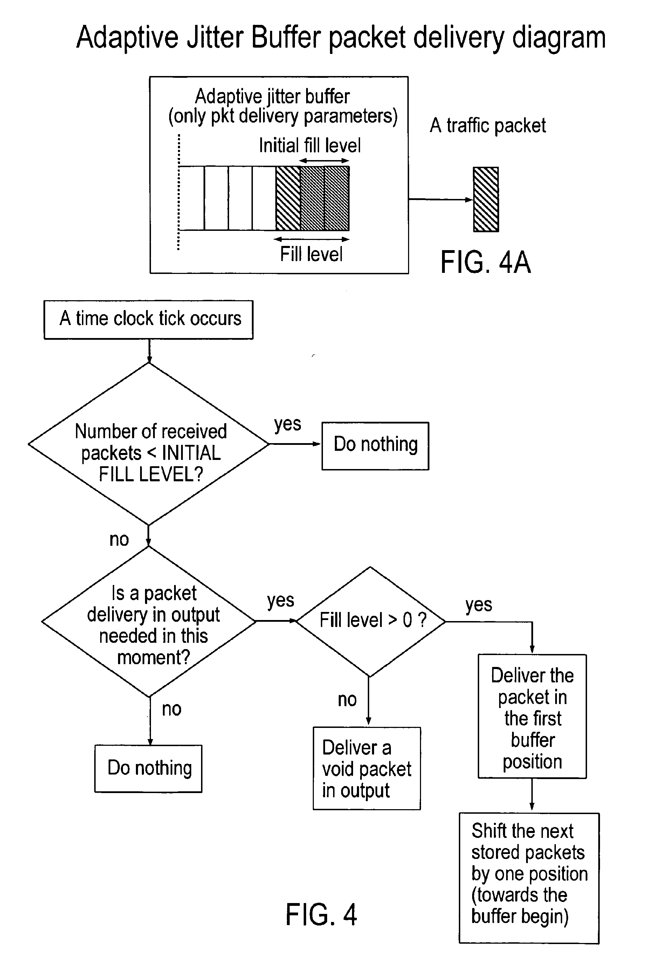

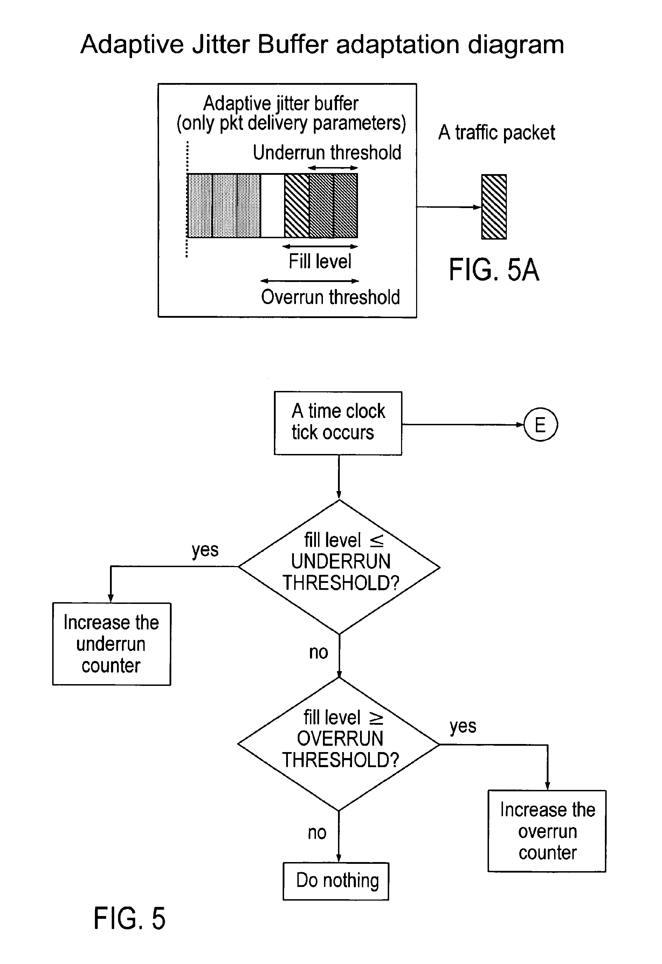

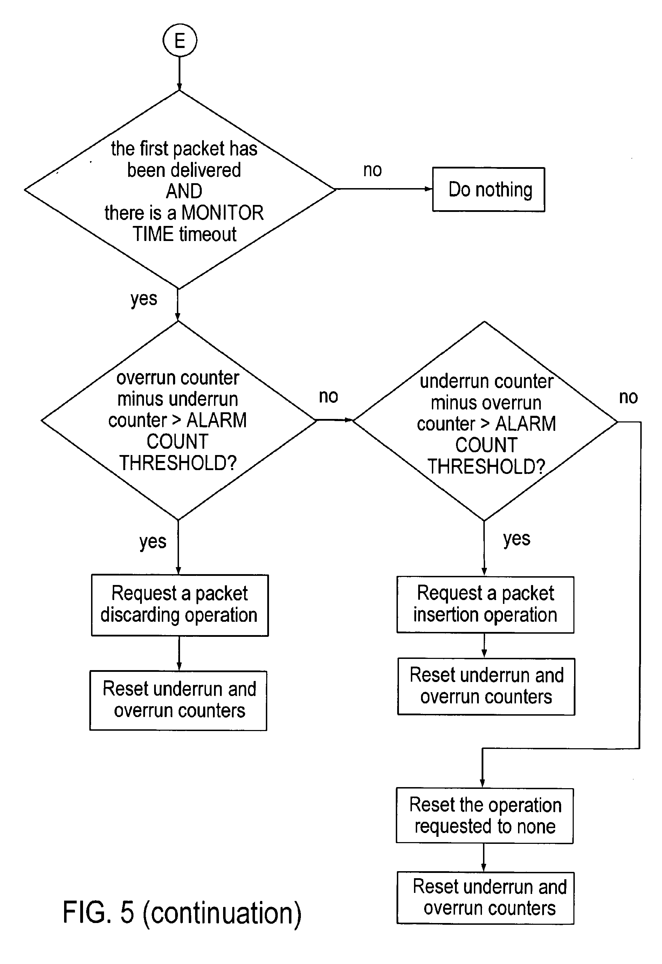

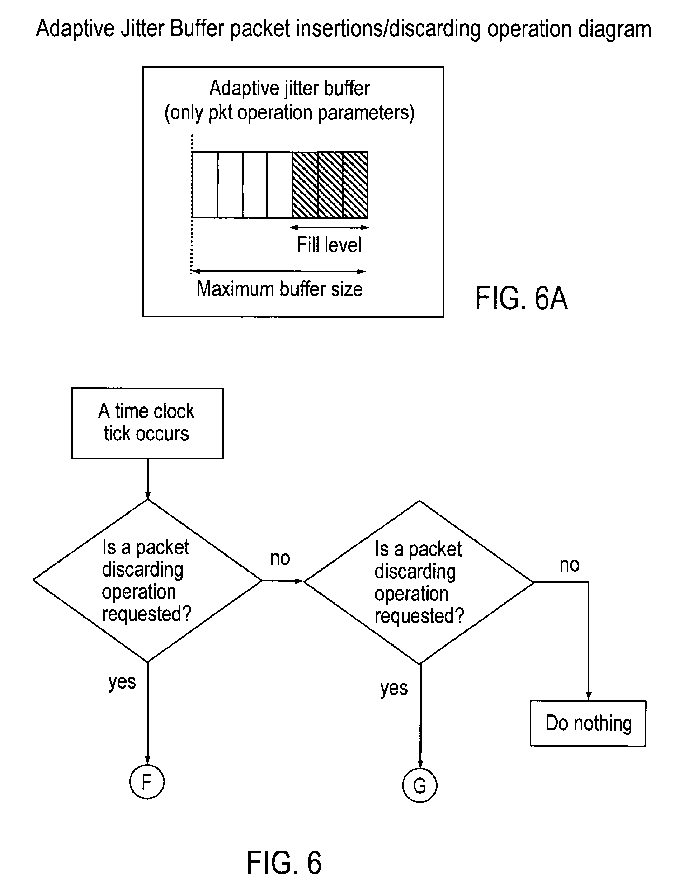

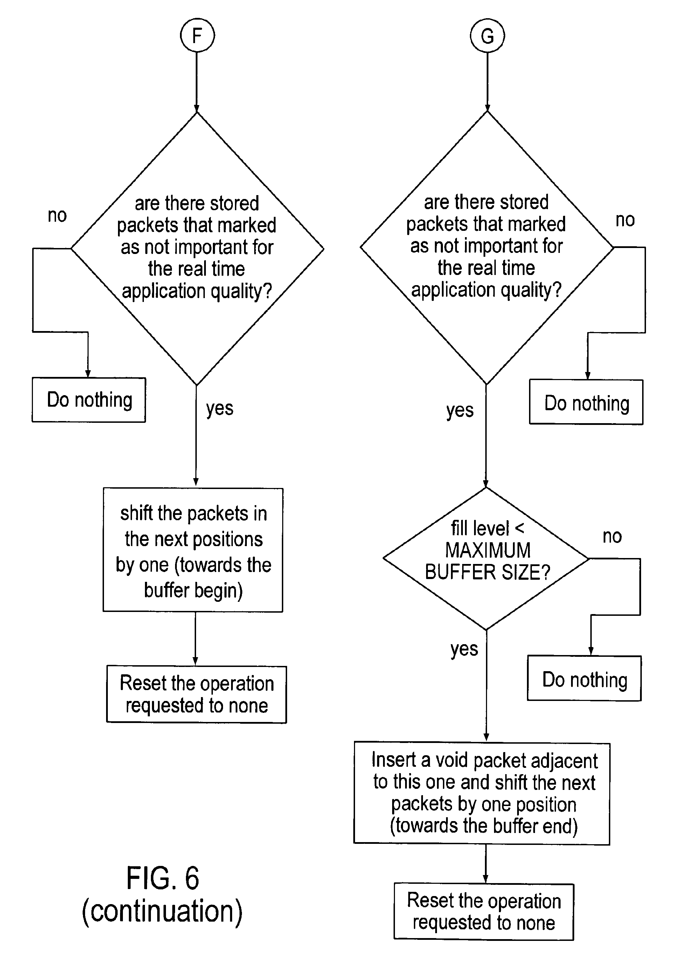

The procedure executed by a Jitter Buffer Manager (JBM) at the receiver includes four concurrent algorithms (executed in parallel) and respectively represented by flow charts of the **figures 3** to **6**. The algorithms for receiving and delivering packets are represented in **figures 3** and **4**; the algorithms for controlling the jitter buffer size is represented in **figures 5** and **6**.

**Fig.3** shows a flowchart describing the main steps of the adaptive de-jittering algorithm triggered at any new packet arrival. When JBM is triggered it updates a received packet counter, whose value is evaluated during the delivery procedure. The second step performs the recognition of the new packet sequence number. This operation is achieved using information drawn directly from the packet PDU data (e.g. sender timestamp in case of RTP packet stream). Moreover, the packet payload is read in order to recognize if the said packet is important or not for the real time application quality and labels the packet, accordingly. For example, a packet that carries coded active speech can be considered more important (e.g. for a VoIP applications) if compared to another one carrying coded silence. If, during buffer fill level adaptation, a void packet is inserted among active speech ones or an active speech packet is discarded, the consequences on application quality are more severe with respect to the same operations performed on silence packets. The following computational steps in the flowchart follow one of three main branches according to the comparison of the new packet sequence number with the expected one.

If the said new packet sequence number is equal to the expected one and the buffer is not full (the fill level is lower than the MAXIMUM BUFFER SIZE value), the new packet is stored in the last available buffer position and. In case the buffer is full, the algorithm searches for a void packet stored in the buffer. If the said void packet exists, the buffer is shrunk through the elimination of the void packet and the new packet is stored in the last buffer position. If the buffer does not contain the said void packet, the new packet is discarded. In any case, the expected sequence number is incremented by one.

If the said new packet sequence number is higher than the expected one and the buffer is not full, then the said procedure adds void packets corresponding to the sequence number gap between the new and the expected ones. Each void packet inserted in the buffer is marked with the respective sequence number of the missing packet. If, during void packets insertion, the buffer fill level reaches the MAXIMUM BUFFER SIZE value minus one, the said operation stops. The new packet is then stored in the last available position. If the buffer happens to be full before the said void packet insertion operation, then the new packet is discarded. In any case, the expected sequence number is set to the new one plus one.

If the said new packet sequence number is lower than the expected one, then the procedure searches in the buffer for a void packet marked with the same sequence number as the new one. If the said void packet exists, then the new one is stored in the buffer in place of it. If the buffer does not contain the said void packet and the buffer is not full, the procedure tries to find in the buffer a non-void packet with the new sequence number. If it succeeds, it means that the new packet has been already received and it is discarded, otherwise, the new packet is stored in the buffer only if there is a void packet marked with the previous sequence number (it means that the void packet corresponding to the new one has been eliminated during a buffer shrinking operation or it could not be stored in the buffer for overflow). In order to store the new packet, the said procedure creates a new buffer place right after the said void packet (the one with the previous sequence number) with a stretching operation. In any case, the expected sequence number is not updated.

**Fig.4** shows a flowchart describing the main steps of the adaptive jitter buffer packet delivery algorithm performed by the JBM any time a clock tick occurs. If the number of received packets is lower than the INITIAL FILL LEVEL value, the said procedure stops until the next clock tick, otherwise, if a packet needs to be delivered in output, according to the real time packet application receiver rate, the procedure checks the buffer fill level. If the buffer is empty, then a void packet is delivered as output (e.g. it can act as a trigger for a packet loss concealment operation in the following receiver subsystems). On the other hand, if there is a packet stored in the first buffer position, it is delivered as output and the packets stored in the buffer are shifted by one position towards the buffer begin.

**Fig.5** shows a flowchart describing the main steps of the adaptive jitter buffer packet adaptation algorithm performed by the JBM any time a clock tick occurs. Two independent branches are then executed.

The first branch includes two checks regarding the current buffer fill level. If the said fill level is lower than the UNDERRUN THRESHOLD, then the underrun counter is incremented by one, whereas if it is higher than the OVERRUN THRESHOLD, the overrun counter is incremented by one.

The second branch performs its computational steps only if at least the first packet of the stream has been received and the difference between the current clock time and the last branch execution reached the MONITOR TIME value. If the said conditions are true, the procedure checks the difference between the overrun and the underrun counters. If this value exceeds the ALARM COUNT THRESHOLD, it means that during the last monitor period overrun events happened more frequently, therefore, the current requested operation is set to packet discarding (the fill level has to be reduced). On the other hand, if the difference between the underrun and the overrun counters exceeds ALARM COUNT THRESHOLD, it means that during the last monitor period underrun events happened more frequently: therefore the current requested operation is set to packet insertion. If none of the two said condition is true, then the current requested operation is set to none. In any case, if the said second branch has been executed, then the overrun and underrun counters are reset.

**Fig.6** shows a flowchart describing the main steps of the adaptive jitter buffer packet insertion/discarding operations algorithm performed by the JBM any time a clock tick occurs. The said algorithm checks the value of the current requested operation. If it is set to packet discarding, then the algorithm searches for stored packets that have been marked by the reception algorithm as not important for the real time application quality (e.g. packet carrying coded silence in VolP applications). If these packets exist, then a buffer shrink operation is performed discarding one of the said packets and shifting the next packets by one position towards the buffer begin. Otherwise, if the current requested operation is set to packet insertion, then the algorithm searches for stored packets that have been marked by the reception algorithm as not important for the real time application quality. If these packets exist, the algorithm performs a buffer stretch operation only if the buffer is not full (the fill level lower than the MAXIMUM BUFFER SIZE value). The said stretch operation is performed inserting a void packet right after or before one of the said found packets. During this operation, the packets that are stored after the new void packet position are shifted by one position towards the buffer end. In any case, if the buffer shrinking or stretching operations have been executed, then the current requested operation is set to none.

Although the invention has been described with particular reference to a preferred embodiment, it will be evident to those skilled in the art, that the present invention is not limited thereto, but further variations and modifications may be applied without departing from the scope of the claims.

## Claims

1. Method of adaptively de-jittering packetized signals buffered at the receiver of a communication network node, including the following steps performed by a buffer control unit:
a) detecting for each received packet if it is important or not for the quality of real-time service and marking the packet accordingly;
b) either expanding or reducing the buffer content starting from a boundary of a zone including buffered packets marked as being unimportant;
**characterized in that** further including the steps of:
c) setting a target maximum length of the buffer and comparatively an initial filling level as the number of packets to be stored in the buffer at the beginning of the packet stream reception before delivering the first packet;
d) setting a first threshold as a predetermined number of packets over the current filling level for incrementing a first event-counting;
e) setting a second threshold as a predetermined number of packets below the current filling level for incrementing a second event-counting;
f) monitoring the overcoming the first threshold for a given time as a condition for discarding at least a packet in the buffer according to step b),
g) monitoring the going below the second threshold for a given time as a condition for introducing at least a void packet in the buffer according to step b).

2. The method of claim 1, **characterized in that** after step e) or f) being executed the relevant event-counting is reset.

3. The method of claim 1 or 2, **characterized in that** said condition at step f) corresponds to surpass a predetermined alarm threshold given by the difference between the first and the second event-counting.

4. The method of claim 1, **characterized in that** said condition at step g) corresponds to surpass a predetermined alarm threshold given by the difference between the second and the first event-counting.

5. The method of claim 1, **characterized in that** said monitoring step f) or g) is executed at the expiration of a predetermined time interval from the last check on the need of a packet insertion or discarding operation.

6. The method of claim 5, **characterized in that** the expiration of a predetermined time interval is monitored at each time clock tick.

7. The method of any claim from 1 to 6, **characterized in that** said initial filling level at step c) is set according to said predetermined maximum length of the buffer and to the expected jitter conditions at the communication network node.

8. The method of any claim from 1 to 7, **characterized in that** said packetized signals are generated by voice over lP service frames.

9. The method of claim 8, **characterized in that** step a) is performed by looking for a flag field in the packet indicating if the frame is either speech or pause or silence.

10. The method of any claim from 1 to 7, **characterized in that** said packetized signals are generated by digital television service frames.

11. The method of claim 10, **characterized in that** step a) is performed by looking for a flag field in the packet indicating if the picture frame is either an anchor or differential one.
